# EUROPEAN PATENT APPLICATION

(11) **EP 2 285 133 A2**
(43) Date of publication of application: **16.02.2011**
(21) Application number: 09762636.0
(22) Date of filing: 09.06.2009
(51) Int. Cl.: H04N 13/02

(54) **STEREOSCOPIC IMAGE GENERATING CHIP FOR MOBILE DEVICE AND STEREOSCOPIC IMAGE DISPLAY METHOD USING THE SAME**

(30) Priority: 10.06.2008 KR 20080054215
(71) Applicant: MASTERIMAGE 3D ASIA, LLC, 826-26, Yeoksam-dong Gangnam-gu Seoul 135-811 (KR)
(72) Inventor: LEE, Young Hoon, Gangnam-gu Seoul 135-811 (KR); JUNG, Yong Bi, Mapo-gu Seoul 121-200 (KR)
(74) Representative: Körfer, Thomas
(86) International application number: PCT/KR2009/003073
(87) International publication number: WO 2009/151249

(57) **Abstract**

The present invention relates to a stereoscopic image generation chip for a mobile equipment and method for displaying a stereoscopic image using the same. The present invention displays a stereoscopic image using a stereoscopic image generation chip loaded in a mobile equipment. In particular, the present invention performs storage/image processing by connecting taken left and right images by side-by-side scheme instead of performing storage/image processing by synthesizing the taken left and right images directly and alternately and is then able to enhance a quality of a displayed stereoscopic image in a displaying step via a synthesizing step, in which the left and right images of the stereoscopic image generation chip are alternately arranged. Moreover, the present invention enables a general 2D image to be 3-dimensionally displayed via the above stereoscopic image generation chip.

## Description

### TECHNICAL FIELD

The present invention relates to a stereoscopic image generation chip using a mobile equipment and method for displaying a stereoscopic image using the same, and more particularly, to a technology for enabling a 2-dimendional (2D) image to be recognized as a 3-dimensional (3D) image. Although the present invention is suitable for a wide scope of applications, it is particularly suitable for enhancing a quality of the stereoscopic image by reinforcing a stereoscopic image processing function of a stereoscopic image generation chip loaded within a mobile equipment.

### BACKGROUND ART

Generally, a stereoscopic image (or, 3D image) implementing method is realized by illuminating different images to both eyes of a human body. And, stereoscopic image display devices can be mainly classified into an eyeglass type display device and a non-eyeglass type (naked eye type) stereoscopic image display device according to whether a separate eyeglass needs to be worn to illuminate different image to both eyes.

The eyeglass type stereoscopic image display device causes inconvenience to an observer who needs to wear special glasses. On the contrary, the non-eyeglass type stereoscopic image display device enables an observer to feel a stereoscopic image without wearing the glasses in a manner of directly looking at a screen, whereby the disadvantage of the eyeglass type stereoscopic image display device can be solved. So, many efforts are made to research and develop the non-eyeglass type stereoscopic image display device. Non-eyeglass type stereoscopic image display devices are mainly classified into a lenticular type device and a parallax-barrier type device.

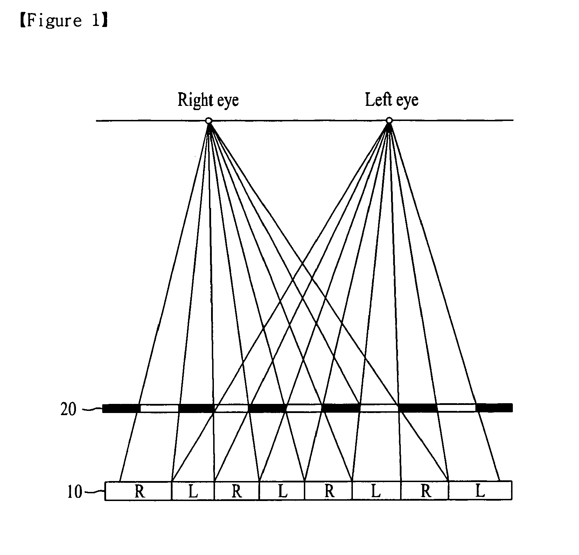

In the following description, operations of a parallax-barrier type stereoscopic image display device are explained with reference to FIG. 1a and FIG. 1b.

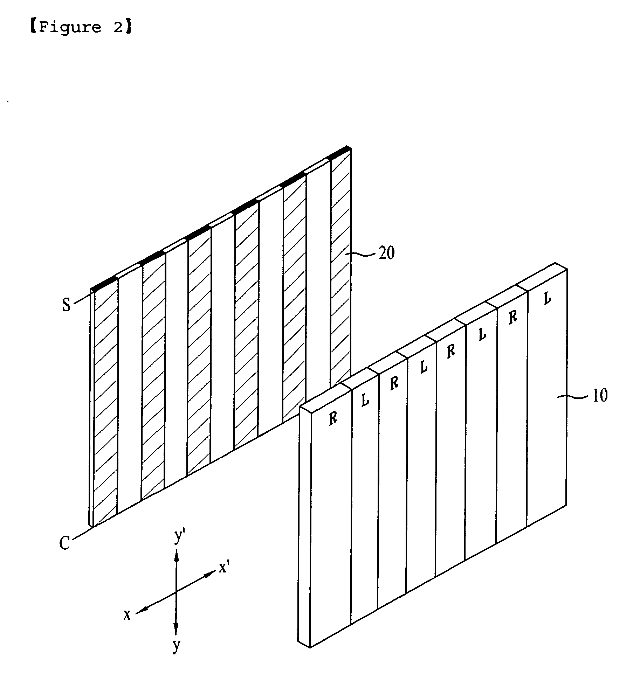

FIG. 1 is a cross-sectional diagram of a stereoscopic image display device using parallax-barrier, and FIG. 2 is a perspective diagram of a stereoscopic image display device using parallax-barrier.

Referring to FIG. 1 and FIG. 2, a stereoscopic image display device according to parallax-barrier includes a display module 10, in which left images L facing a vertical direction (Y-Y' in FIG. 2) corresponding to both left and right eyes and right images R facing a horizontal direction (X-X' in FIG. 2) corresponding to both left and right eyes are alternately arranged and a bar type shielding film (called a barrier 20) provided in front of the display module 10 to face the vertical direction. In this stereoscopic image display device, as shown in FIG. 1, the display module 10 and the barrier 20 are arranged in a manner that light corresponding to the left image L is incident on the left eye only and light corresponding to the right image R is incident on the right eye only. Hence, the left and right images L and R, which are separated by this arrangement, are separately observed to enable a user to experience 3-dimensional effect.

A stereoscopic image content, which is stored in a manner that the left and right images are alternately arranged, is needed to implement the above explained stereoscopic image. However, for the stereoscopic image content generation, expensive equipments for capturing the stereoscopic image are necessary. As the stereoscopic image content generation is not popularized so far, it is provided by a specific service provider only and is not widely used by general users.

Thus, the technology of facilitating a high-quality stereoscopic image to be generated using a conventional mobile device including a mobile phone is highly expected. Moreover, if a previous 2D image is displayable by being adjusted to enable a user to experience 3D effect, the demand for the 3D technology will rise.

Besides, in case of a stereoscopic image, since a quality in compression and decoding of a compressed image depends on a special processing for left and right images, a stereoscopic image generation chip or module suitable for characteristics of stereoscopic image contents is necessary.

### DISCLOSURE OF THE INVENTION

### TECHNICAL PROBLEM

### TECHNICAL SOLUTION

Accordingly, the present invention is directed to a stereoscopic image generation chip using a mobile equipment and method for displaying a stereoscopic image using the same that substantially obviate one or more of the problems due to limitations and disadvantages of the related art.

An object of the present invention is to provide a method of producing a higher-quality stereoscopic image in a manner of facilitating a general user to produce a stereoscopic image content using a mobile device having a pair of camera modules and generating a content by checking a stereoscopic image displayed actually in capturing the stereoscopic image and adjusting a depth.

In particular, another object of the present invention is to provide a method of enhancing a quality of a displayed stereoscopic image in a simple manner of improving an image processing procedure by considering unique characteristics of a stereoscopic image content while performing a stereoscopic image generation via the above described mobile equipment using a stereoscopic image generation chip loaded in the mobile equipment.

A further object of the present invention is to provide a method of increasing a level of utilization of a stereoscopic image technology by displaying a conventional 2D image to enable a user to experience 3D effect to a predetermined extent.

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, in displaying a stereoscopic image via a stereoscopic image generation chip loaded in a mobile equipment including a backend capable of image processing and two camera modules, a stereoscopic image displaying method includes a step (1) of inputting left and right images taken by the two camera modules of the mobile equipment to the stereoscopic image generation chip, a step (2) of enabling the stereoscopic image generation chip to connect the inputted left and right images by a side-by-side scheme and outputting the connected images to the backend of the mobile equipment, a step (3) of inputting the side-by-side connected left and right images image-processed by the backend to the stereoscopic image generation chip from the backend, a step (4) of dividing each of the left and right images into a plurality of images in a vertical direction through the stereoscopic image generation chip and then synthesizing the left and right images in a manner of arranging a plurality of the left image divided images and a plurality of the right image divided images alternately, and a step (5) of displaying the synthesized image via a stereoscopic image display module including a parallax barrier or a lenticular lens array.

Preferably, the stereoscopic image displaying method, before the step (5), further includes a step (4-1) of adjusting a depth by shifting a plurality of the left image divided images and a plurality of the right image divided images in different directions of left and right directions, respectively, within the synthesized image. In this case, the 'depth' is assumed as meaning an extent for a user to recognize that an image is projected from a screen or located in rear of the screen.

More preferably, the step (3) includes the step of inputting a 2D image image-processed by the backend to the stereoscopic image generation chip, the step (4) includes the step of dividing the 2D image into a plurality of images in the vertical direction via the stereoscopic image generation chip and mapping a plurality of the divided images to a pseudo left image combination and a pseudo right image combination sequentially and alternately, the step (4-1) includes the step of adjusting a depth by shifting each of the pseudo left image combination and the pseudo right image combination in a different direction of the left and right directions, and the step (5) includes the step of displaying the depth adjusted pseudo left image combination and the depth adjusted pseudo right image combination via the stereoscopic image display module. Therefore, a general 2D image can be displayed to enable a user to experience a 3-dimensional effect.

More preferably, the step (4-1) is performed by determining a extent of shifting a plurality of the left image divided images/the pseudo left image combination and a plurality of the right image divided images/the pseudo right image combination in the different directions, respectively according to control information inputted via an input device of the mobile equipment by a user having checked a stereoscopic image displayed on an LCD of the mobile equipment.

Preferably, in the step (2), the inputted left image and the inputted right image are connected by matching photographing time syncs of the inputted left and right images using a time sync generated from a counter of the stereoscopic image generation chip. More preferably, each of the two camera modules includes a pause function including at least one of a ready function and a power-down function. And, the step (2) includes the step of if syncs of the left and right images inputted from the two camera modules are not matched, pausing the left and right images using the pause functions of the two camera modules and then resuming the left and right images simultaneously to match the syncs.

To further achieve these and other advantages and in accordance with the purpose of the present invention, a method of displaying a stereoscopic image of a 2D image includes the steps of dividing a 2D image into a plurality of images in a vertical direction and mapping a plurality of the divided images to a pseudo left image combination and a pseudo right image combination sequentially and alternately, adjusting a depth by shifting the pseudo left image combination and the pseudo right image combination in different directions of left and right direction, respectively, and displaying the depth adjusted pseudo left image combination and the depth adjusted pseudo right image combination via a stereoscopic image display module including a parallax barrier or a lenticular lens array.

Preferably, the 2D image is image-processed by a backend of a mobile equipment, which is capable of image processing, and is then inputted to a stereoscopic image generation chip provided to the mobile equipment and the mapping step and the depth adjusting step are performed by the stereoscopic image generation chip.

Preferably, the depth adjusting step is performed by determining a extent of shifting the pseudo left image combination and the pseudo right image combination in the different directions, respectively according to control information inputted via an input device of the mobile equipment by a user having checked a stereoscopic image displayed on an LCD of the mobile equipment.

To further achieve these and other advantages and in accordance with the purpose of the present invention, a stereoscopic image generation chip for a mobile equipment, which performs a stereoscopic image displaying function by being loaded in the mobile equipment including a backend capable of image processing and two camera modules, includes a camera input unit configured to received inputs of left and right images taken by the two camera modules of the mobile equipment, an image connecting module performing a processing for connecting the inputted left and right images by a side-by-side scheme, a camera output unit configured to output the left and right images connected by the side-by-side scheme by the image connecting module to the backend of the mobile equipment, a display input unit configured to receive inputs of the side-by-side connected left and right images image-processed by the backend from the backend, a synthesizing module synthesizing the side-by-side connected left and right images in a manner of dividing each of the left and right images into a plurality of images in a vertical direction and then arranging a plurality of the left image divided images and a plurality of the right image divided images alternately, and a display output unit configured to output an image synthesized by the synthesizing module to a stereoscopic image display module including a parallax barrier or a lenticular lens array.

Preferably, the stereoscopic image generation chip for the mobile equipment further includes a depth adjusting module adjusting a depth by shifting a plurality of the left image divided images and a plurality of the right image divided images in different directions of left and right directions, respectively, within the image synthesized by the synthesizing module.

More preferably, the display input unit additionally receives an input of a 2D image image-processed by the backend, the synthesizing unit additionally performs a function of dividing the 2D image into a plurality of images in the vertical direction and mapping a plurality of the divided images to a pseudo left image combination and a pseudo right image combination sequentially and alternately, the depth adjusting unit additionally performs a function of adjusting a depth by shifting each of the pseudo left image combination and the pseudo right image combination in a different direction of the left and right directions, and the display output unit additionally performs a function of outputting the pseudo left image combination depth-adjusted by the depth adjusting module and the d pseudo right image combination depth-adjusted by the depth adjusting module to the stereoscopic image display module.

More preferably, the depth adjusting module performs depth adjustment by determining a extent of shifting a plurality of the left image divided images/the pseudo left image combination and a plurality of the right image divided images/the pseudo right image combination in the different directions, respectively according to control information inputted via an input device of the mobile equipment by a user having checked a stereoscopic image displayed on an LCD of the mobile equipment.

Preferably, the stereoscopic image generation chip for the mobile equipment further includes a counter configured to generate a time sync of the stereoscopic image generation chip. And, the image connecting module connects the inputted left image and the inputted right image by matching photographing time syncs of the inputted left and right images using a time sync generated from the counter.

More preferably, each of the two camera modules includes a pause function including at least one of a ready function and a power-down function. If syncs of the left and right images inputted from the two camera modules are not matched, the image connecting module connects the left and right images to match a photographing time sync of the left and right images by pausing the left and right images using the pause functions of the two camera modules and then resuming the left and right images simultaneously.

To further achieve these and other advantages and in accordance with the purpose of the present invention, a stereoscopic image generation chip for a mobile equipment includes a synthesizing module dividing a 2D image into a plurality of images in a vertical direction and mapping a plurality of the divided images to a pseudo left image combination and a pseudo right image combination sequentially and alternately, a depth adjusting module adjusting a depth by shifting the pseudo left image combination and the pseudo right image combination in different directions of left and right direction, respectively, and a display output unit outputting the depth adjusted pseudo left image combination and the depth adjusted pseudo right image combination to a stereoscopic image display module including a parallax barrier or a lenticular lens array.

Preferably, the 2D image is image-processed by a backend of a mobile equipment, which is capable of image processing, and is then inputted to the stereoscopic image generation chip of the mobile equipment

More preferably, the depth adjusting module performs the depth adjustment by determining a extent of shifting the pseudo left image combination and the pseudo right image combination in the different directions, respectively according to control information inputted via an input device of the mobile equipment by a user having checked a stereoscopic image displayed on an LCD of the mobile equipment.

It is to be understood that both the foregoing general description and the following detailed description are exemplary and explanatory and are intended to provide further explanation of the invention as claimed.

### ADVANTAGEOUS EFFECTS

Accordingly, the present invention provides the following effects or advantages.

First of all, the present invention is able to produce a higher-quality stereoscopic image in a manner of facilitating a general user to produce a stereoscopic image content using a mobile device having a pair of camera modules and generating a content by checking a stereoscopic image displayed actually in capturing the stereoscopic image and adjusting a depth.

In particular, the present invention is able to enhance a quality of a displayed stereoscopic image in a simple manner of improving an image processing procedure by considering unique characteristics of a stereoscopic image content (i.e., a characteristic that left and right images should be alternately arranged) and influence on performing image processing on the alternately arranged left and right images while performing a stereoscopic image generation via the above described mobile equipment using a stereoscopic image generation chip loaded in the mobile equipment.

Moreover, the present invention is able to increase a level of utilization of a stereoscopic image technology by displaying a conventional 2D image to enable a user to experience 3D effect to a predetermined extent.

### DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a cross-sectional diagram of a stereoscopic image display device using parallax-barrier;
FIG. 2 is a perspective diagram of a stereoscopic image display device using parallax-barrier;
FIG. 3 is a diagram of a left image and a right image respectively captured by two camera modules;
FIG. 4 is a diagram of an image synthesized by a stereoscopic image generation chip, in which a left image and a right image respectively captured by two camera modules are synthesized together;
FIG. 5 is a diagram for explaining a general method of displaying a stereoscopic image using a stereoscopic image generation chip loaded in a mobile equipment;
FIG. 6 is a diagram for explaining a method of displaying a stereoscopic image using a stereoscopic image generation chip loaded in a mobile equipment according to one embodiment of the present invention;
FIG. 7 is a diagram for explaining a principle of adjusting depths of captured left and right images using a stereoscopic image generation chip according to one embodiment of the present invention;
FIG. 8 is a diagram for explaining a method of displaying a 2D image three-dimensionally according to one embodiment of the present invention;
FIG. 9 is a conception diagram for a stereoscopic image generation chip to process a 2D image and/or a 3D image according to one embodiment of the present invention;
FIG. 10 is a diagram for explaining a method,of matching synchronization between left and right images captured by two camera modules without a memory module according to one embodiment of the present invention; and
FIG. 11 is a diagram for explaining an arrangement relation of a stereoscopic image generation chip within a mobile equipment according to one embodiment of the present invention.

### BEST MODE

### MODE FOR INVENTION

Reference will now be made in detail to the preferred embodiments of the present invention, examples of which are illustrated in the accompanying drawings. Detailed description disclosed in the following intends to explain one exemplary embodiment of the present invention together with the accompanying drawings instead of providing a unique embodiment type of the present invention.

The following detailed description includes details to provide the full understanding of the present invention. And, it is apparent to those skilled in the art that the present invention can be embodied without these details. Occasionally, to avoid the vagueness of the concept of the present invention, well-known structures and devices are omitted or represented as block diagrams centering on core functions of the structures and devices. Wherever possible, the same reference numbers will be used throughout the drawings to refer to the same or like parts.

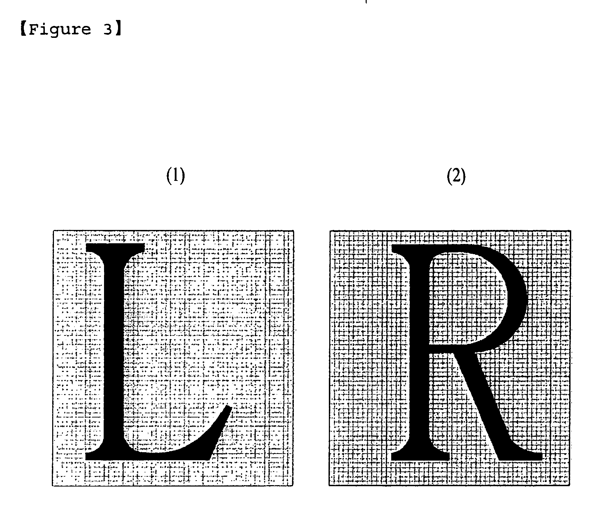

FIG. 3 is a diagram of a left image and a right image respectively captured by two camera modules.

According to one embodiment of the present invention, a left image L and a right image R, as shown in (1) and (2) of FIG. 3, are taken using a pair of camera modules for such a conventional mobile equipment as a mobile phone capable of a video photographing function and the like, respectively. Meanwhile, a mobile equipment having a conventional video processing function includes a function of processing an image taken by one camera module through a back-end chipset of the mobile equipment or a simple back-end. This mobile equipment is unable to synthesize left and right images, which are taken by two cameras according to the intention of one embodiment of the present invention, by matching synchronization in-between and is also unable to adjust the 3D effect. Therefore, according to one embodiment of the present invention, a stereoscopic image generation chip is loaded in the above described mobile equipment and a stereoscopic image can be generated using the stereoscopic image generation chip.

Meanwhile, the left and right images L and R shown in FIG. 3 can include still pictures or moving pictures and correspond to general video contents through the camera modules, respectively. Moreover, each of the camera modules can be provided with a function of supporting CMOS or CCD, which is optional.

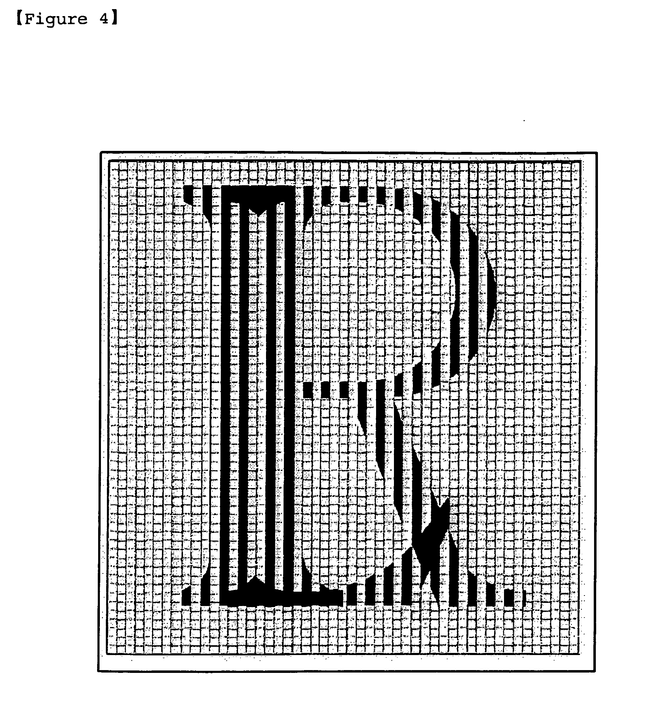

FIG. 4 is a diagram of an image synthesized by a stereoscopic image generation chip, in which a left image and a right image respectively captured by two camera modules are synthesized together.

In particular, left and right images taken by the two camera modules, as shown in (1) and (2) of FIG. 3, are inputted to a stereoscopic image generation chip, divided by a unit of column in vertical direction, and then synthesized by being alternately arranged in horizontal direction. Regarding the left and right image arranged alternately and spatially, the left and right image are just seen by left and right eye of a user, respectively, using the parallax-barrier shown in FIG. 1 and FIG. 2. Therefore, the user is able to recognize a stereoscopic image overall.

Based on a general theory on the above described stereoscopic image generating method, an enhanced stereoscopic image generation chip and method using the same are explained as follows. In particular, a stereoscopic image is generated by loading the stereoscopic image generation chip in a mobile equipment. And, a stereoscopic image of high quality can be displayed by considering a unique characteristic of a stereoscopic image content. For this, a general method of generating a stereoscopic image using a stereoscopic image generation chip loaded in a mobile equipment and problems of this general method are explained first.

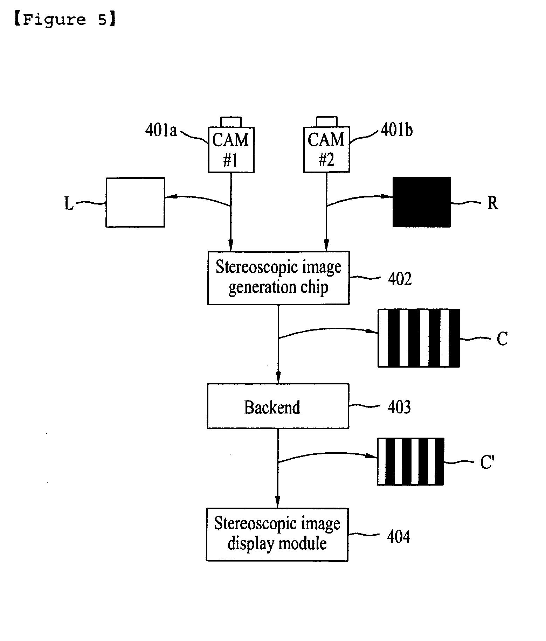

FIG. 5 is a diagram for explaining a general method of displaying a stereoscopic image using a stereoscopic image generation chip loaded in a mobile equipment.

Generally, in order to generate a stereoscopic image using a general mobile equipment, camera modules provided to a conventional mobile equipment are extended to two camera modules 401 and 401b. And, a loading of a stereoscopic image generation chip 402 is necessary to perform such a function as stereoscopic image synthesis, which cannot be handled by the conventional mobile equipment, and the like. Of course, it is also possible to add a function of the stereoscopic image generation chip by software to a conventional back-end 403, which is not excluded by the present invention. In particular, a method according to each embodiment of the present invention can be performed by a stereoscopic image generation chip or steps of this method can be performed by software entirely or in part. Yet, according to one preferred embodiment of the present invention, a processing speed of stereoscopic image synthesis and processing is raised by hardware processing using a separate stereoscopic image generation chip and a method of generating a stereoscopic image more stably is taken into consideration.

First of all, a pair of the camera modules 401 and 402b take left and right images L and R to correspond to left and right human eyes, respectively and then deliver the left and right images to the stereoscopic image generation chip 402. Having received the left and right images L and R, the stereoscopic image generation chip 402 is able to generate a synthesized image C by synthesizing the received left and right images L and R in a manner that the left and right images are alternately arranged in horizontal direction. This generated synthesized image C is then delivered to the back-end 403 of the mobile equipment.

Having received the synthesized image C, t back-end side of the mobile equipment performs various kinds of image processing on the synthesized image C. This image processing includes an image compression process, a compressed content storing process, a stored image decoding process and the like.

Various schemes for the image compression in these processes are provided according to a still picture or a moving picture. For clarity of description, a compression scheme for a still picture is schematically explained for example.

Compression for a still picture can be performed in a manner of reading an image data value of each pixel according to a predetermined sequence by subdividing an image by a small pixel unit and then mapping a continuous shape of each read data value to a determined code value according to a predetermined reference. In this case, the repetition of '0' has a significant meaning in the image compression. For instance, if '0' is repeated 10 times, a count of the repeated `0' is represented as a separate signal instead of enumerating `0' ten times to compress image data.

Yet, in case of a stereoscopic image content having left and right images L and R repeated alternately, as shown in FIG. 4, a plurality of boundary areas exist between the left image and the right image. And, these boundary areas increase discontinuity of image. Thus, if the image discontinuity increases, a compression ratio in the image compressing process is lowered and a size of the compressed content is increased. Hence, a large-scale storage medium is required for a stereoscopic image content storage. Moreover, as correlation of the divided pixels is lowered, a quality of the compressed image may be degraded.

Meanwhile, a stereoscopic image content stored in a storage medium can be displayed using the display module 404 through a decoding process. In this decoding process, the low correlation between content data may cause the degradation of a decoding image quality. Hence, a decoding image C' delivered to the display module 404 from the back-end side 403 in FIG. 5 may have a quality lower than that of a 2D image on the same condition.

According to one embodiment of the present invention, the following method is proposed to solve the above problems due to the discontinuity or low correlation of a stereoscopic image content delivered to a back-end side of a mobile equipment.

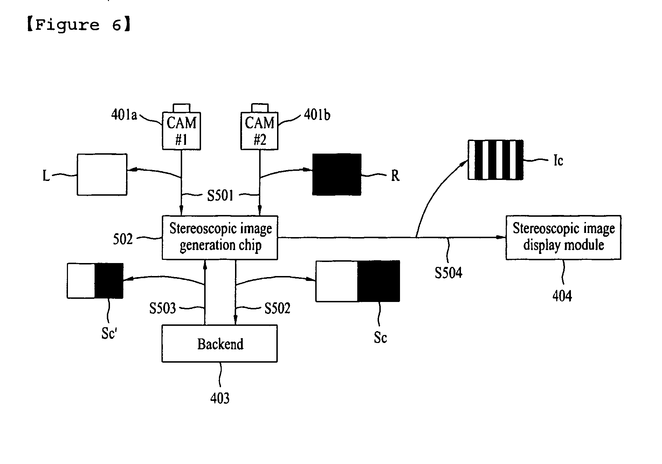

FIG. 6 is a diagram for explaining a method of displaying a stereoscopic image using a stereoscopic image generation chip loaded in a mobile equipment according to one embodiment of the present invention.

In this embodiment, a pair of camera modules 401a and 401b provided to a mobile equipment take a left image L and a right image R and then deliver them to a stereoscopic image generation chip 502 [S501]. Yet, the stereoscopic image generation chip 502 according to this embodiment proposes to synthesize all left and right images L and R by 'side-by-side' scheme instead of synthesizing the left and right images L and R by the repetition of L, R, L, R, ... shown in FIG. 4, In the following description, the 'side-by-side' scheme means that at least two images are intactly connected in left-to-right direction. In case that the left and right images L and R taken by a pair of the camera modules 401a and 401b are the moving picture, they can be connected to match time synchronization using a counter of the stereoscopic image generation chip 502. This will be explained later. This, the left and right images L and R connected together by the side-by-side scheme are delivered to a back-end side 403 of the mobile equipment [S502]. Various kinds of the above mentioned image processing can be performed on the delivered images.

The stereoscopic image content having left and right images L and R connected together by the side-by-side scheme has the image data discontinuity smaller than that of the former stereoscopic image content having left and right images L and R arranged alternately in FIG. 4, thereby obtaining a high compression ratio. Accordingly, a size of a compressed image gets smaller. And, it is able to store more contents in a limited storage medium of a mobile equipment. Moreover, high correlation of image data can reduce the image data loss in the compression and decoding process.

The present embodiment proposes that the stereoscopic image content through the image processing processes for compression, storage, decoding and the like is inputted to the stereoscopic image generation chip 502 again [S503]. In particular, the present embodiment proposes that the stereoscopic image generation chip 502 includes a stereoscopic image display module driving function, whereas the stereoscopic image image-processed by the back-end side is directly delivered to the stereoscopic image display module 404 in the genera stereoscopic image display process in the mobile equipment shown in FIG. 4 (i.e., the stereoscopic image display module driving function is provided not to the stereoscopic image generation chip but to the back-end side of the mobile equipment). And, the stereoscopic image generation chip 502 according to the present embodiment needs to additionally perform a stereoscopic image content synthesizing function in a following manner.

In particular, a side-by-side connected stereoscopic image content Sc' image-processed by the back-end side 403 is preferably transformed into a form in which left and right images are alternately arranged to fit the display scheme of the parallax-barrier or lenticular type stereoscopic image display module 404. Hence, the stereoscopic image generation chip 502 according to the present embodiment divides each part of the left and right images L and R of the inputted stereoscopic image content into a plurality of images in vertical direction and then synthesizes the left and right images in a manner that a plurality of the left-image-divided images and a plurality of the right-image-divided images are alternately arranged in horizontal direction. This synthesized stereoscopic image content Ic is delivered to the stereoscopic image display module 404. The parallax-barrier type stereoscopic image display or the lenticular lens array type stereoscopic image display, which is described with reference to FIGs. 1 to 3, is then performed [S504].

As mentioned in the foregoing description of the present embodiment, a stereoscopic image content size is reduced and a stereoscopic image display of higher quality is enabled. Yet, the recognized 3-dimensional effect may differ according to a display means or a user. In particular, a user may wish to feel stronger depth or weaker depth due to inconvenience in the recognizing process. In this case, the 'depth' is assumed as meaning an extent that a user recognizes that an image is projected from a screen or located in rear of the screen. Therefore, according to one preferred embodiment of the present invention, a user checks a stereoscopic image and then separately adjusts the depth to be suitable for the corresponding user, thereby feeling the 3-dimensional effect more efficiently.

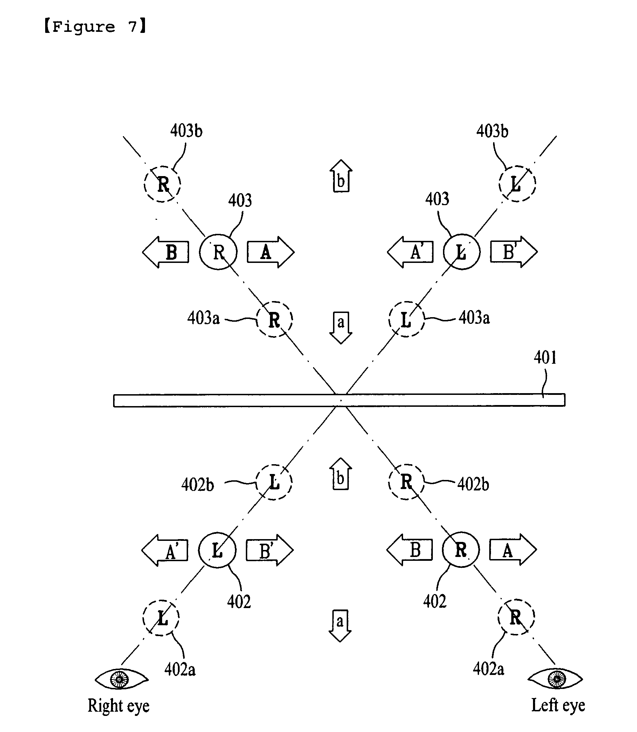

FIG. 7 is a diagram for explaining a principle of adjusting depths of captured left and right images using a stereoscopic image generation chip according to one embodiment of the present invention.

Referring to FIG. 7, according to a synthesized position of left and right images configuring a stereoscopic image, a user recognizes that a corresponding object is located in front of a speaker 401 (e.g., a position of left or right image indicated by '402') or may recognize that a corresponding object is located in rear of a speaker 401 (e.g., a position of left or right image indicated by '403'). According to one embodiment of the present invention, the 3-dimensional effect can be adjusted according to a user in a manner of adjusting depth by adjusting a relative shift of left and right arrangements of the left and right images synthesized by the aforesaid method.

The 3D effect adjustment through the synthesis and relative shift of the left and right images can be implemented by a stereoscopic image processor of a stereoscopic image generation chip according to one embodiment of the present invention, and more particularly, by a 3D effect adjusting module of the stereoscopic image processor in addition to a conventional mobile equipment configuration. Alternatively, the 3D effect adjustment can be implemented by software installed in a mobile equipment, which will be explained later.

In particular, when it is recognized that an object is located at the location indicated by '402' in front of the screen 401 according to an arrangement relation between the synthesized left and right images, if the right image is shifted in a direction "A" corresponding to the right direction of left and right directions and the left image is shifted in a direction "A'" corresponding to the left direction, a user recognizes that the left and right images are located at the location indicated by 402a due to the gap between the left and right images. Therefore, it brings an effect as if the object is shifted in a direction (i.e., direction "a") getting farther from the screen 401. Regarding an object recognized as located (at location 403) in rear of the screen 401 within the same image, if the right image is shifted to the direction "A" and the left image is shifted in the direction "A'", a user recognizes that the left and right images are located at the location indicated by 403a due to the gap between the left and right images. Therefore, it brings an effect as if the object is shifted in a direction (i.e., direction "a") toward the screen 401.

Consequently, if the right image is shifted in the direction "A" and the left image is shifted in the direction "A'", it brings an effect that the object is shifted in the direction "a" overall, whereby overall depth can be adjusted.

On the contrary, when an object is recognized as located at the location indicated by '402' in front of the screen 401, if the right image is shifted in the left direction "B" and the left image is shifted in the direction "B'" opposite to the B, a user recognizes as if the images are located at the location 402b. Therefore, it brings an effect that the images are shifted toward the screen 401 (i.e., the direction "b"). Moreover, when a target is recognized as located at the location indicated by '403' in rear of the screen 401, if the right image is shifted in the direction "B" and the left image is shifted in the direction "B' ", a user recognizes as if the images are located at the location 403b. Therefore, it brings an effect that the images are shifted in the direction getting farther from the screen 401 (i.e., the direction "b").

Consequently, if the right image is shifted in the direction "B" and the left image is shifted in the direction "B' ", it brings an effect that the object is shifted in the direction "b" overall, whereby overall depth can be adjusted.

As mentioned in the description with reference to FIG. 7, the depth adjustment can be simultaneously performed while a 3D effect of a photographed stereoscopic image through LCD of a mobile equipment according to one embodiment of the present invention. Therefore, it is able to generate a stereoscopic image by adjusting a 3D effect differently requested by a display module or a user.

Thus, the depth adjustment is performed on the stored content to directly display the corresponding result. The depth adjusted content is re-stored to be directly used for a next playback. Through this, a stereoscopic image generating method and a stereoscopic image generation chip according to the present embodiment enable a stereoscopic image to be displayed by being optimized for each user condition.

Besides, the depth adjustment scheme shown in FIG. 7 enables a user to feel a 2D image stereoscopically to a predetermined extent by randomly adjusting the depth of the 2D image in a following manner. This technique is explained as another embodiment of the present invention.

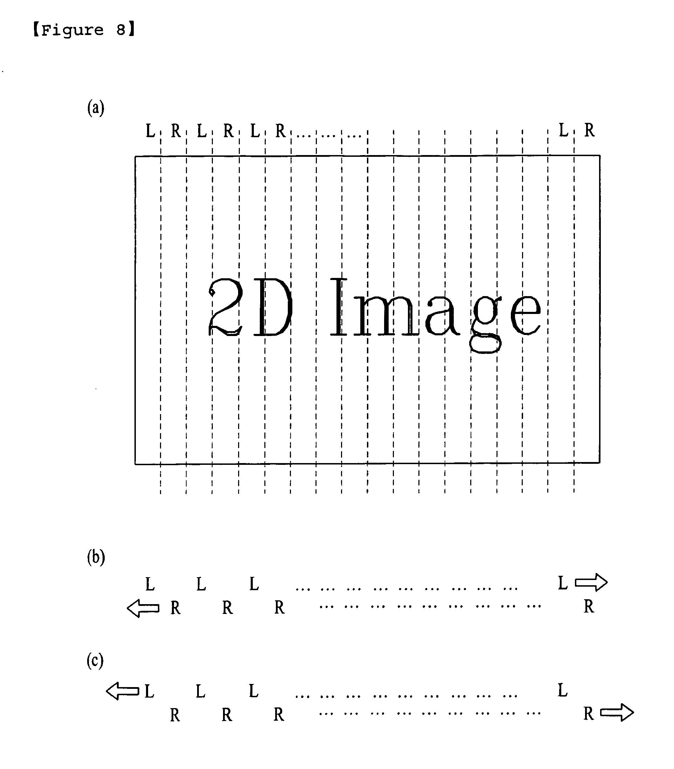

FIG. 8 is a diagram for explaining a method of displaying a 2D image three-dimensionally according to one embodiment of the present invention.

First of all, a 2D image shown in (a) of FIG. 8 may include a 2D image image-processed by a back-end side of a mobile equipment, an image taken by one camera module of a mobile equipment or an image image-processed by another medium. Having received an input of the 2D image, a stereoscopic image generation chip according to the present embodiment firstly divides the 2D image into a plurality of images in vertical direction and then maps the divided image parts to a left image unit and a right image unit sequentially and alternately, as shown in (a) of FIG. 8. In the following description, to facilitate the discrimination of the alternately arranged pattern from the originally captured left and right images, the mapped combination of the left image part by dividing the 2D image is named 'pseudo left image combination' and the mapped combination of the right image part is named 'pseudo right image combination'. Depth of the pseudo left/right image combination can be adjusted as shown in (b)/(c) of FIG. 8.

In (b) of FIG. 8, a pseudo left image combination is shifted in a right direction and a pseudo right image combination is relatively shifted in a left direction. Thus, if a pseudo left image combination is shifted in a right direction and a pseudo right image combination is shifted in a left direction, an image is shifted in a direction (i.e., direction "b") in rear of a screen, as shown in 7.

In (c) of FIG. 8, a pseudo left image combination is shifted in a left direction and a pseudo right image combination is relatively shifted in a right direction. Thus, if a pseudo left image combination is shifted in a left direction and a pseudo right image combination is shifted in a right direction, an image is shifted in a direction (i.e., direction "a") in front of a screen, as shown in 7. Thus, the depth adjusted pseudo left and right image combinations are provided to a user through a parallax-barrier or lenticular array type stereoscopic image display module in a manner that the pseudo left image combination is illuminated to a right eye only while the pseudo right image combination is illuminated to a left eye only. Therefore, a user is able to experience a 3D effect.

The above described stereoscopy can be used in a manner of being independent from or combined with the above-described general 3D image display.

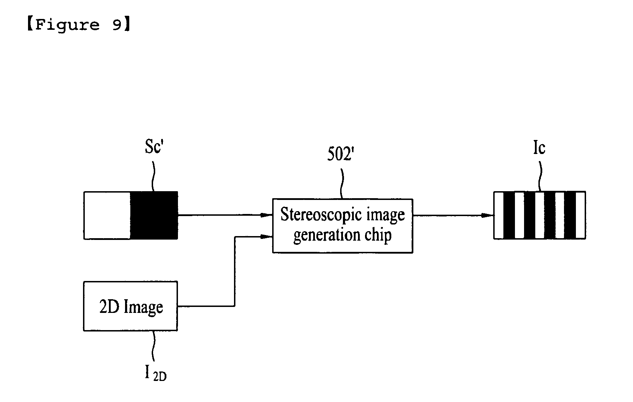

FIG. 9 is a conception diagram for a stereoscopic image generation chip to process a 2D image and/or a 3D image according to one embodiment of the present invention.

First of all, a stereoscopic image generation chip 502' according to the present invention can be provided with a 3D content having left and right images combined by the side-by-side scheme or a general 2D content from a back-end side of a mobile equipment. Preferably, the 3D/2D content is a content image-processed by the back-end side. Having been provided with the content, the stereoscopic image generation chip 502' performs processing on the 3D content to synthesize in a manner of dividing left and right image parts into a plurality of images and then arranging a plurality of the images alternately. And, the stereoscopic image generation chip 502' can perform processing on the 2D image in a manner of mapping a plurality of images divided in the vertical direction, as mentioned in the foregoing description with reference to FIG. 8, to a pseudo left image combination and a pseudo right image combination. Hence, an image Ic' outputted to a stereoscopic image display module has a pattern configured in a manner that left image/pseudo left image and right image/pseudo right image are alternately arranged. Through this, it can be displayed via the parallax barrier/lenticular array type display module by being discriminated to left and right eyes of a user.

Meanwhile, according to one preferred embodiment of the present invention, it is able to display a general 2D image and a 3D image in a manner of combining the general 2D image and the 3D image together. In particular, in case of at least one specific object, left and right images taken by a pair of camera modules are processed into a combined form and can be then displayed to differ in depth according to each part of the corresponding object. And, the objects can be displayed on a general 2D image background. In this case, as mentioned in the foregoing description with reference to FIG. 8, depth of the 2D image corresponding to the background can be adjusted overall. Therefore, a user can actually enjoy a stereoscopic image.

In the above description of the parallax barrier type stereoscopic image display module, a stereoscopic image, which is synthesized in a manner of dividing each of left and right images by a column unit in a vertical direction and arranging the divided images in a horizontal direction only, as shown in FIG. 1 and FIG. 2, is recognized as a stereoscopic image by a user. Yet, according to 'Cell structure parallax-barrier and stereoscopic image display apparatus using the same (Korean Patent Application No. 2005-0127631)' applied by the present applicant, the parallax barrier is implemented into a cell type and can be selectively driven in horizontal or vertical direction. Hence, in case of synthesizing a stereoscopic image according to one embodiment of the present invention, a direction of the synthesis is not necessarily limited to one direction (either vertical direction or horizontal direction). And, it is able to present a stereoscopic image by adjusting a direction of synthesizing the stereoscopic image and a barrier direction of a parallax barrier type display module used for presenting the stereoscopic image.

Meanwhile, in case that left and right images taken by a pair of camera modules correspond to a moving picture, the taken images should be synthesized to match time synchronization in the above described stereoscopic image generation chip. In this time synchronization, using time sync generated by a counter of a stereoscopic image generation chip according to one embodiment of the present invention, if sync of the left and right images fails to be matched, one of the left and right images is temporarily stored in a memory of the stereoscopic image generation chip, synchronization is then performed by matching the sync. Alternatively, using a pause function including a ready or power-down function included in a pair of conventional camera modules, if a variation exists in a voltage according to the left and right images, both of the left and right images are temporarily stopped and then resumed to match the sync between the left and right images simultaneously. Further details are explained as follows.

First of all, if a sync between left and right images fails to match, a stereoscopic image generation chip according to one embodiment of the present invention can include a memory module configured to store either the left or right image temporarily. In case that left and right images taken by a pair of camera modules fails to match each other in sync, this memory module is able to perform a buffer function of temporarily storing an image having a sync ahead of that of the other to match the sync in-between. Through this, it is able to synthesize the left and right images by matching them in sync.

Meanwhile, according to another embodiment of the present invention, it is able to match left and right images in sync by the following method despite that a stereoscopic image generation module fails to include a separate memory module.

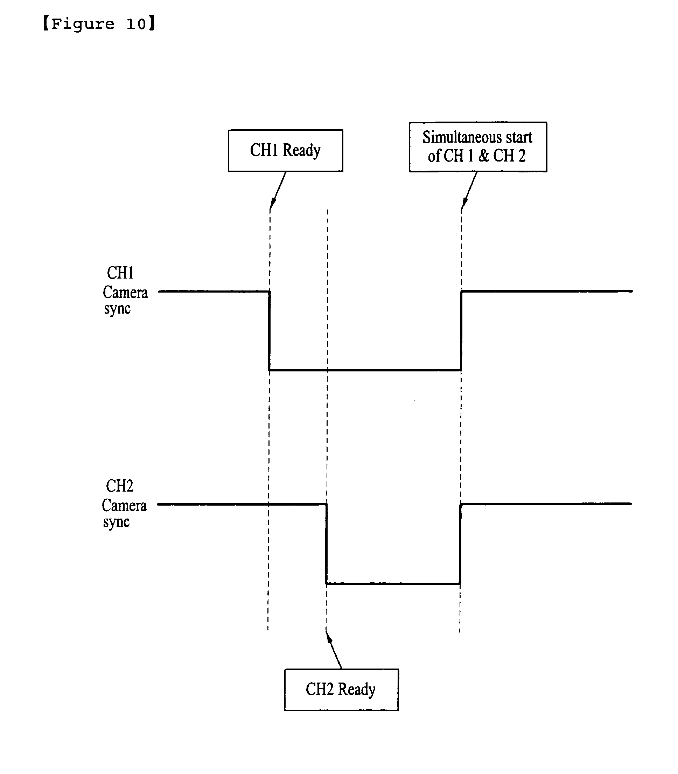

FIG. 10 is a diagram for explaining a method of matching synchronization between left and right images taken by two camera modules without a memory module according to one embodiment of the present invention.

In particular, syncs of left and right images taken by a pair of camera modules are represented as 'CH 1 camera sync' and 'CH 2 camera sync', respectively. If the syncs of the two images are not matched, a process for matching the syncs using a pause function of a conventional camera module is shown in the drawing.

A conventional camera module can include a pause function such as a ready function, a power-down function and the like for convenience of image photographing. Hence, according to one embodiment of the present invention, even if a memory module for temporary storage of either a left image or a right image is not provided to a stereoscopic image generation chip, when syncs of the left and right images inputted from a pair of camera modules are not matched together, if an even occurs in the syncs of the two images (i.e., a timing point that a voltage is changed into 'low' from 'high' or into 'high' from 'low', as shown in FIG. 10), the syncs can be matched in a manner of pausing the left and right images and then resumes them by matching the syncs of the two images.

Thus, the function of matching the syncs of the left and right images using the pause functions of the two camera modules without a memory module provided to the stereoscopic image generation chip can be performed by a stereoscopic image processor of the stereoscopic image generation chip, which will be explained in detail in the following description. Yet, the present invention is non-limited by this function as long as the above method can be performed.

Meanwhile, how to arrange the stereoscopic image generation chip according to each of the aforesaid embodiments of the present invention within the mobile equipment is explained as follows.

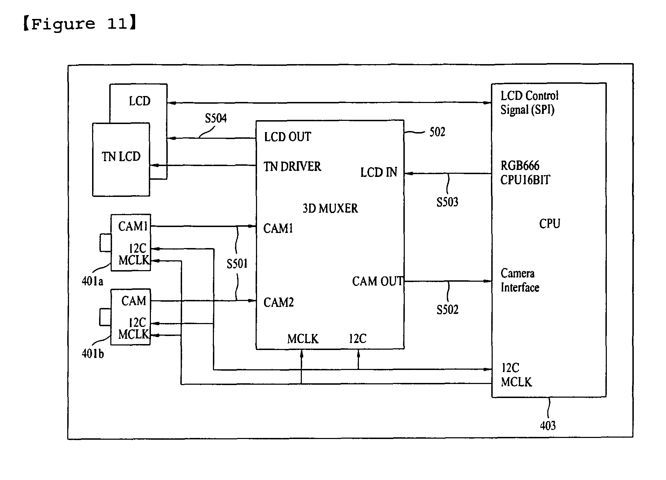

FIG. 11 is a diagram for explaining an arrangement relation of a stereoscopic image generation chip within a mobile equipment according to one embodiment of the present invention.

FIG. 11 can basically correspond to the block diagram of the respective elements shown in FIG. 6. In particular, two camera modules 401a and 402b are indicated by 'CAM1' and 'CAM2' and a stereoscopic image generation chip 502 is indicated by '3D MUXER'. Meanwhile, a back-end side 403 of a mobile equipment is represented as 'CPU'. And, a stereoscopic image display module 404 is indicated by 'LCD' and 'TN LCD'. Reference numbers are shown in FIG. 11 according to this corresponding relation.

Detailed operation related to FIG. 11 is explained with reference to FIG. 6 as follows. First of all, left and right images taken by a pair of camera modules CAM1 401a and CAM2 401) are inputted to the 3D MUXER 502 performing a stereoscopic image generation chip function. In this case, an output signal of a camera is inputted via a pair of camera input units CAM1 and CAM2 of the 3D MUXER 502. Having received the left and right images from the camera modules, the 3D MUXER 502 is able to combine the left and right images by the side-by-side scheme. In doing so, if each of the images is a moving picture, syncs need to be matched. The combined images can be inputted to a back-end side of the mobile equipment via a camera output unit CAM OUT of the 3D MUXER 502, i.e., to a CPU 403 via a camera interface.

Through this, the CPU 403 of the mobile equipment can perform such a procedure as compression of a stereoscopic image content, storage of a compressed image, decoding of a stored image and the like. The 3D content through the image processing can be inputted to the 3D MUXER 502 again via a display module input unit, i.e., an LCD input unit LCD IN. Moreover, as mentioned in the foregoing description, according to one embodiment of the present invention, the 3D MUXER 502 is able to perform the depth adjustment function by receiving a general 2D content from the CPU 403 as well as a 3D content.

Having received the image-processed 3D/2D content, the 3D MUXER 502 is able to perform a synthesizing process on the 3D content in a manner of arranging left and right images alternately. And, the 3D MUXER 502 is able to perform a mapping process on the 2D content in a manner of dividing the image into a plurality of images in vertical direction and then mapping the images to a pseudo left image combination and a pseudo right image combination, respectively. This synthesized/mapped information is delivered to a display output unit, e.g., a stereoscopic image display module via an LCD output unit LCD OUT (e.g., LCD and TN LCD).

To facilitate the present invention to be implemented by those skilled in the art, FIG. 11 shows detailed forms of the respective function blocks shown in FIG. 6, by which the scope of the present invention is non-limited. In particular, it is apparent to those skilled in the art that the respective function blocks shown in FIG. 6 can be named other parts/names as long as they perform the same or equivalent functions.

The above-described stereoscopic image displaying method according to the embodiments of the present invention can be implemented by being modified as follows. Firs of all, according to another embodiment of the present invention, left and right images taken by two cameras of such a mobile equipment as a mobile phone, a UMPC and the like are connected by side-by-side scheme, are delivered to another medium, and are then able to be displayed. In the following description, the present embodiment is explained by naming a device for displaying a stereoscopic image 'first equipment' and by naming a device for generating a content by taking left and right images `second equipment'.

First of all, the second equipment includes a pair of camera modules. A left image and a right image are taken by a pair of the camera modules, respectively. Subsequently, the taken left and right images can undergo a process to be connected by the side-by-side scheme in the second equipment. If the second equipment is the mobile equipment according to the aforesaid embodiment of the present invention, the side-by-side scheme connection of the left and right images can be performed by the stereoscopic image generation chip.

Through this, a stereoscopic image content is generated. The present embodiment proposes that the stereoscopic image content is displayed on another medium (first equipment). In particular, the left and right images connected by the second equipment by the side-by-side scheme can be inputted to the first equipment via such a wired connection terminal as a USB and the like or via various wireless connection means. In this case, the left and right images inputted as the stereoscopic image content may be simply connected by the second equipment by the side-by-side scheme. Preferably, the left and right images include the content on which such image processing as compression and the like have been performed by the second equipment. If the second equipment is the mobile equipment according to the aforesaid embodiments, this image processing can be performed by the back-end side of the mobile equipment.

As mentioned in the above description, having received the stereoscopic image content, the first equipment is able to synthesize the left and right images in a manner of dividing the inputted left and right images into a plurality of images in a vertical direction and then arranging a plurality of the left image divided images and a plurality of the right image divided images alternately. Through this, the stereoscopic image content is displayed via a stereoscopic image display module of the first equipment including a parallax barrier or lenticular lens array to provide a stereoscopic image to a user.

Moreover, the stereoscopic image content inputted to the first equipment according to the above described embodiment may be a content generated as a pseudo 3D image by adjusting depth of a 2D image in the second equipment, as mentioned in the foregoing description with reference to FIG. 7.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents. For instance, in the detailed description of the invention, 'mobile equipment' has the concept of including all kinds of mobile equipments including a mobile phone, a PDA, a PMP and the like. The mobile equipment needs not to be limited to a specific type equipment as long as a mobile equipment includes a pair of camera modules and a back-end chip capable of image processing. And, a stereoscopic image can be generated by loading a stereoscopic image generation chip according to the present invention in a random mobile equipment.

Accordingly, the present invention intends to be non-limited by various embodiments in this disclosure and also intends to provide the widest scope coinciding with the principles and new features in this disclosure.

### INDUSTRIAL APPLICABILITY

As mentioned in the foregoing description, a stereoscopic image generation chip and stereoscopic image generating method using the same according to the present invention are applicable to various mobile equipments including a mobile phone, a PDA, a PMP and the like, thereby enabling a user to experience a conventional 2D image 3-dimensionally. And, the present invention can implement a stereoscopic image display of higher quality.

## Claims

1. In displaying a stereoscopic image via a stereoscopic image generation chip loaded in a mobile equipment including a backend capable of image processing and two camera modules, a stereoscopic image displaying method comprising:
a step (1) of inputting left and right images taken by the two camera modules of the mobile equipment to the stereoscopic image generation chip;
a step (2) of enabling the stereoscopic image generation chip to connect the inputted left and right images by a side-by-side scheme and outputting the connected images to the backend of the mobile equipment;
a step (3) of inputting the side-by-side connected left and right images image-processed by the backend to the stereoscopic image generation chip from the backend;
a step (4) of dividing each of the left and right images into a plurality of images in a vertical direction through the stereoscopic image generation chip and then synthesizing the left and right images in a manner of arranging a plurality of the left image divided images and a plurality of the right image divided images alternately; and
a step (5) of displaying the synthesized image via a stereoscopic image display module including a parallax barrier or a lenticular lens array.

2. The stereoscopic image displaying method of claim 1, before the step (5), further comprising a step (4-1) of adjusting a depth by shifting a plurality of the left image divided images and a plurality of the right image divided images in different directions of left and right directions, respectively, within the synthesized image.

3. The stereoscopic image displaying method of claim 2, wherein the step (3) comprises the step of inputting a 2D image image-processed by the backend to the stereoscopic image generation chip, wherein the step (4) comprises the step of dividing the 2D image into a plurality of images in the vertical direction via the stereoscopic image generation chip and mapping a plurality of the divided images to a pseudo left image combination and a pseudo right image combination sequentially and alternately, wherein the step (4-1) comprises the step of adjusting a depth by shifting each of the pseudo left image combination and the pseudo right image combination in a different direction of the left and right directions, and wherein the step (5) comprises the step of displaying the depth adjusted pseudo left image combination and the depth adjusted pseudo right image combination via the stereoscopic image display module.

4. The stereoscopic image displaying method of claim 2 or claim 3, wherein the step (4-1) is performed by determining a extent of shifting a plurality of the left image divided images/the pseudo left image combination and a plurality of the right image divided images/the pseudo right image combination in the different directions, respectively according to control information inputted via an input device of the mobile equipment by a user having checked a stereoscopic image displayed on an LCD of the mobile equipment.

5. The stereoscopic image displaying method of claim 1, wherein in the step (2), the inputted left image and the inputted right image are connected by matching photographing time syncs of the inputted left and right images using a time sync generated from a counter of the stereoscopic image generation chip.

6. The stereoscopic image displaying method of claim 5, wherein each of the two camera modules includes a pause function including at least one of a ready function and a power-down function and wherein the step (2) comprises the step of if syncs of the left and right images inputted from the two camera modules are not matched, pausing the left and right images using the pause functions of the two camera modules and then resuming the left and right images simultaneously to match the syncs.

7. A method of displaying a stereoscopic image of a 2D image, comprising the steps of:
dividing a 2D image into a plurality of images in a vertical direction and mapping a plurality of the divided images to a pseudo left image combination and a pseudo right image combination sequentially and alternately;
adjusting a depth by shifting the pseudo left image combination and the pseudo right image combination in different directions of left and right direction, respectively; and
displaying the depth adjusted pseudo left image combination and the depth adjusted pseudo right image combination via a stereoscopic image display module including a parallax barrier or a lenticular lens array.

8. The method of claim 7, wherein the 2D image is image-processed by a backend of a mobile equipment, which is capable of image processing, and is then inputted to a stereoscopic image generation chip provided to the mobile equipment and wherein the mapping step and the depth adjusting step are performed by the stereoscopic image generation chip.

9. The method of claim 7 or claim 8, wherein the depth adjusting step is performed by determining a extent of shifting the pseudo left image combination and the pseudo right image combination in the different directions, respectively according to control information inputted via an input device of the mobile equipment by a user having checked a stereoscopic image displayed on an LCD of the mobile equipment.

10. A stereoscopic image generation chip for a mobile equipment, which performs a stereoscopic image displaying function by being loaded in the mobile equipment including a backend capable of image processing and two camera modules, the stereoscopic image generation chip comprising:
a camera input unit configured to receive inputs of left and right images taken by the two camera modules of the mobile equipment;
an image connecting module performing a processing for connecting the inputted left and right images by a side-by-side scheme;
a camera output unit configured to output the left and right images connected by the side-by-side scheme by the image connecting module to the backend of the mobile equipment;
a display input unit configured to receive inputs of the side-by-side connected left and right images image-processed by the backend from the backend;
a synthesizing module synthesizing the side-by-side connected left and right images in a manner of dividing each of the left and right images into a plurality of images in a vertical direction and then arranging a plurality of the left image divided images and a plurality of the right image divided images alternately; and
a display output unit configured to output an image synthesized by the synthesizing module to a stereoscopic image display module including a parallax barrier or a lenticular lens array.

11. The stereoscopic image generation chip for the mobile equipment of claim 10, further comprising a depth adjusting module adjusting a depth by shifting a plurality of the left image divided images and a plurality of the right image divided images in different directions of left and right directions, respectively, within the image synthesized by the synthesizing module.

12. The stereoscopic image generation chip for the mobile equipment of claim 11,
wherein the display input unit additionally receives an input of a 2D image image-processed by the backend,
wherein the synthesizing unit additionally performs a function of dividing the 2D image into a plurality of images in the vertical direction and mapping a plurality of the divided images to a pseudo left image combination and a pseudo right image combination sequentially and alternately,
wherein the depth adjusting unit additionally performs a function of adjusting a depth by shifting each of the pseudo left image combination and the pseudo right image combination in a different direction of the left and right directions, and
wherein the display output unit additionally performs a function of outputting the pseudo left image combination depth-adjusted by the depth adjusting module and the d pseudo right image combination depth-adjusted by the depth adjusting module to the stereoscopic image display module.

13. The stereoscopic image generation chip for the mobile equipment of claim 11 or claim 12, wherein the depth adjusting module performs depth adjustment by determining a extent of shifting a plurality of the left image divided images/the pseudo left image combination and a plurality of the right image divided images/the pseudo right image combination in the different directions, respectively according to control information inputted via an input device of the mobile equipment by a user having checked a stereoscopic image displayed on an LCD of the mobile equipment.

14. The stereoscopic image generation chip for the mobile equipment of claim 10, further comprising a counter configured to generate a time sync of the stereoscopic image generation chip, wherein the image connecting module connects the inputted left image and the inputted right image by matching photographing time syncs of the inputted left and right images using a time sync generated from the counter.

15. The stereoscopic image generation chip for the mobile equipment of claim 14, wherein each of the two camera modules includes a pause function including at least one of a ready function and a power-down function and wherein if syncs of the left and right images inputted from the two camera modules are not matched, the image connecting module connects the left and right images to match a photographing time sync of the left and right images by pausing the left and right images using the pause functions of the two camera modules and then resuming the left and right images simultaneously.

16. A stereoscopic image generation chip for a mobile equipment, comprising:
a synthesizing module dividing a 2D image into a plurality of images in a vertical direction and mapping a plurality of the divided images to a pseudo left image combination and a pseudo right image combination sequentially and alternately;
a depth adjusting module adjusting a depth by shifting the pseudo left image combination and the pseudo right image combination in different directions of left and right direction, respectively; and
a display output unit outputting the depth adjusted pseudo left image combination and the depth adjusted pseudo right image combination to a stereoscopic image display module including a parallax barrier or a lenticular lens array.

17. The stereoscopic image generation chip for the mobile equipment of claim 16, wherein the 2D image is image-processed by a backend of a mobile equipment, which is capable of image processing, and is then inputted to the stereoscopic image generation chip of the mobile equipment

18. The stereoscopic image generation chip for the mobile equipment of claim 16 or claim 17, wherein the depth adjusting module performs the depth adjustment by determining a extent of shifting the pseudo left image combination and the pseudo right image combination in the different directions, respectively according to control information inputted via an input device of the mobile equipment by a user having checked a stereoscopic image displayed on an LCD of the mobile equipment.

19. In displaying a stereoscopic image via a first equipment, a stereoscopic image displaying method comprising:
a step (1) of inputting left and right images taken by two camera modules of a second equipment to the first equipment in a manner that the left and right images are connected by a side-by-side scheme;
a step (2) of synthesizing left and right images inputted from the first equipment in a manner of dividing each of the left and right images inputted from the first equipment into a plurality of images in a vertical direction and then arranging a plurality of the left image divided images and a plurality of the right image divided images alternately; and
a step (3) of displaying the synthesized image via a stereoscopic image display module including a parallax barrier or lenticular lens array of the first equipment.

20. The stereoscopic image displaying method of claim 19, wherein the left and right images connected by the side-by-side scheme are inputted to the first equipment via a connecting means between the first and second equipments.

21. The stereoscopic image displaying method of claim 20, wherein the first equipment comprises a mobile equipment and wherein the connecting means comprises a wire
connecting means and a wireless connecting means.
